# EUROPEAN PATENT APPLICATION

(11) **EP 4 733 127 A1**
(43) Date of publication of application: **29.04.2026**
(21) Application number: 24208175.0
(22) Date of filing: 22.10.2024
(51) Int. Cl.: B60L 53/53, B60L 53/67, B60L 53/68, B60L 53/80, B60L 58/12

(54) **APPROACHES FOR ENERGY TRANSFER FROM A VEHICLE**

(71) Applicant: Volvo Construction Equipment AB, 631 85 Eskilstuna (SE)
(72) Inventor: EKMAN, Gordon, MOHEDA (SE); ÖRKENRUD, Kim, VÄXJÖ (SE); KVIST, Roland, BRAÅS (SE)
(74) Representative: Ström & Gulliksson AB

(57) **Abstract**

A method is disclosed for a vehicle (500) which comprises a primary power unit (PPU) and an energy storing system (ESS). The vehicle is configurable in different operation modes including a default mode (501), a preparation mode (505), and an energy transfer mode (508), and the vehicle is adapted to transfer energy (580) from the PPU and/or from the ESS to a piece of equipment (530) external to the vehicle when configured in the energy transfer mode.

The method comprises obtaining (503) an indication of an upcoming activation of the energy transfer mode, activating (504) the preparation mode in response to the obtained indication, causing (506) the PPU to provide power for charging the ESS during the preparation mode, and performing (507) the indicated activation of the energy transfer mode following the preparation mode.

There is also disclosed a method for centralized control of a plurality of vehicles.

Corresponding computer systems, vehicle, computer program product, and non-transitory computer-readable storage medium are also disclosed.

## Description

### TECHNICAL FIELD

The disclosure relates generally to vehicle control. In particular aspects, the disclosure relates to approaches for energy transfer from a vehicle to a piece of equipment which is external to the vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle. More generally, the disclosure can be applied to any vehicle and any piece of equipment, as suitable. In a particular example, the vehicle is a dump truck and the piece of equipment is an excavator.

### BACKGROUND

In many situations, it may be cumbersome to provide convenient charging for battery powered equipment located at some distance from a connection point with power gird service or other charging possibilities. For example, the equipment may be stationary, or the relocation of the equipment to a connection point for charging may in itself consume a substantial amount of energy which renders the charging procedure very inefficient as a whole.

One example of the latter is when the equipment is an excavator operating at a construction site. In addition to the energy consumption needed for relocating the excavator for charging, the time required for relocation typically also causes a halt of operation for one or more tasks at the constructions site.

Thus, there is a need for approaches for convenient charging of battery powered equipment.

### SUMMARY

According to a first aspect of the disclosure, a computer system is provided. The computer system is for a vehicle which comprises a primary power unit (PPU) and an energy storing system (ESS). The vehicle is configurable in different operation modes including a default mode, a preparation mode, and an energy transfer mode, and is adapted to transfer energy from the PPU and/or from the ESS to a piece of equipment external to the vehicle when configured in the energy transfer mode. The computer system comprises processing circuitry configured to: obtain an indication of an upcoming activation of the energy transfer mode, activate the preparation mode in response to the obtained indication, cause the PPU to provide power for charging the ESS during the preparation mode, and perform the indicated activation of the energy transfer mode following the preparation mode. The first aspect of the disclosure may seek to enable convenient charging of battery powered equipment. A technical benefit may include that the vehicle is adequately prepared to commence energy transfer as soon as it arrives at the location of the piece of equipment. Thereby, charging latency can be reduced and/or any the duration of any interruption in operation for the piece of equipment may be reduced.

According to a second aspect of the disclosure, a vehicle is provided, which comprises the computer system of the first aspect, a primary power unit (PPU) and an energy storing system (ESS). The vehicle is configurable in different operation modes including a default mode, a preparation mode, and an energy transfer mode, and is adapted to transfer energy to a piece of equipment external to the vehicle when configured in the energy transfer mode. The second aspect of the disclosure may seek to enable convenient charging of battery powered equipment. A technical benefit may include efficient utilization of the vehicle.

According to a third aspect of the disclosure, a computer system is provided for centralized control of a plurality of vehicles adapted to transfer energy to a piece of equipment when configured in an energy transfer mode. The computer system comprises processing circuitry configured to: detect a need for battery replenishment for the piece of equipment, select a vehicle from the plurality of vehicles, and provide an indication of an upcoming activation of the energy transfer mode to the selected vehicle. The third aspect of the disclosure may seek to enable convenient charging of battery powered equipment. A technical benefit may include that a (most) suitable vehicle is selected for energy transfer. Thereby, charging latency can be reduced and/or any the duration of any interruption in operation for the piece of equipment may be reduced.

According to a fourth aspect of the disclosure, a computer-implemented method is provided for a vehicle which comprises a primary power unit (PPU) and an energy storing system (ESS), wherein the vehicle is configurable in different operation modes including a default mode, a preparation mode, and an energy transfer mode, and wherein the vehicle is adapted to transfer energy from the PPU and/or from the ESS to a piece of equipment external to the vehicle when configured in the energy transfer mode. The method comprises: obtaining (by processing circuitry of a computer system) an indication of an upcoming activation of the energy transfer mode, activating (by the processing circuitry) the preparation mode in response to the obtained indication, causing (by the processing circuitry) the PPU to provide power for charging the ESS during the preparation mode, and performing (by the processing circuitry) the indicated activation of the energy transfer mode following the preparation mode. The fourth aspect of the disclosure may seek to enable convenient charging of battery powered equipment. A technical benefit may include that the vehicle is adequately prepared to commence energy transfer as soon as it arrives at the location of the piece of equipment. Thereby, charging latency can be reduced and/or any the duration of any interruption in operation for the piece of equipment may be reduced.

Optionally in some examples, including in at least one preferred example, causing the PPU to provide power for charging the ESS during the preparation mode may comprise causing (by the processing circuitry) the PPU to operate at its maximum capacity, or within a specified range. A technical benefit may include an increased probability that the vehicle is fully charged (or at least charged to a certain extent) when it arrives at the location of the piece of equipment.

Optionally in some examples, including in at least one preferred example, the method may further comprise - during the energy transfer mode - causing (by the processing circuitry) one or more of: the PPU to operate at its maximum capacity, or within a specified range; and the ESS to be emptied at its maximum rate, or within a specified range. A technical benefit may include a decreased probability that the vehicle charge is depleted during the energy transfer.

Optionally in some examples, including in at least one preferred example, the method may further comprise - responsive to the power provided by the PPU exceeding a maximum reception rate of the piece of equipment during the energy transfer mode - causing (by the processing circuitry) the PPU to provide an excess of the power for charging the ESS. A technical benefit may include efficient energy utilization (e.g., avoiding heat losses).

Optionally in some examples, including in at least one preferred example, obtaining the indication of an upcoming activation of the energy transfer mode may comprise receiving an energy transfer control signal from a centralized control function. A technical benefit may include that the vehicle is only prompted to perform energy transfer when it is suitable to do so, which provides for efficient utilization of a vehicle fleet.

Optionally in some examples, including in at least one preferred example, obtaining the indication of an upcoming activation of the energy transfer mode may comprise receiving an energy transfer request signal from the piece of equipment. A technical benefit may include that the vehicle is implicitly informed that it is suitable to perform energy transfer (e.g., due to proximity to the piece of equipment), which provides for efficient utilization of a vehicle fleet.

Optionally in some examples, including in at least one preferred example, obtaining the indication of an upcoming activation of the energy transfer mode may comprise receiving an energy transfer preparation input via an operator interface associated with the vehicle. A technical benefit may include that the task to perform energy transfer may be selectively initiated by an operator of the vehicle (e.g., allowing prioritization among different tasks).

According to a fifth aspect of the disclosure, a computer-implemented method is provided for centralized control of a plurality of vehicles adapted to transfer energy to a piece of equipment when configured in an energy transfer mode. The method comprises: detecting (by processing circuitry of a computer system) a need for battery replenishment for the piece of equipment, selecting (by the processing circuitry) a vehicle from the plurality of vehicles, and providing (by the processing circuitry) an indication of an upcoming activation of the energy transfer mode to the selected vehicle. The fifth aspect of the disclosure may seek to enable convenient charging of battery powered equipment. A technical benefit may include that a (most) suitable vehicle is selected for energy transfer. Thereby, charging latency can be reduced and/or any the duration of any interruption in operation for the piece of equipment may be reduced.

Optionally in some examples, including in at least one preferred example, selecting a vehicle from the plurality of vehicles may comprise selecting (by the processing circuitry) a vehicle which comprises a primary power unit (PPU) and an energy storing system (ESS), wherein the vehicle is configurable in different operation modes including a default mode, a preparation mode in which the PPU provides power for charging the ESS, and an energy transfer mode in which energy is transferred from the PPU and/or from the ESS. A technical benefit may include that vehicles configurable in the preparation mode may be prioritized in the selection.

Optionally in some examples, including in at least one preferred example, selecting a vehicle from the plurality of vehicles may comprise selecting (by the processing circuitry) a vehicle which fulfills one or more of: a charge condition, a distance condition, and an activity condition. A technical benefit may include that vehicles may be prioritized in the selection based on one or more of: the expected duration before arrival at the location of the piece of equipment, their potential charge at arrival, and whether they need to interrupt another task to perform energy transfer.

According to a sixth aspect of the disclosure, a computer program product is provided, which comprises program code for performing, when executed by the processing circuitry, the method of any of the fourth and fifth aspects.

According to a seventh aspect of the disclosure, a non-transitory computer-readable storage medium is provided, which comprises instructions, which when executed by the processing circuitry, cause the processing circuitry to perform the method of any of the fourth and fifth aspects.

The sixth and/or seventh aspect of the disclosure may seek to convey program code for enabling convenient charging of battery powered equipment. A technical benefit may include that new vehicles and/or legacy vehicles may be conveniently configured, by software installation/update, to obtain an indication of an upcoming activation of the energy transfer mode, activate a preparation mode in response to the obtained indication, cause the PPU to provide power for charging the ESS during the preparation mode, and perform the indicated activation of the energy transfer mode following the preparation mode. Alternatively or additionally, a technical benefit may include that new central control functions for vehicles and/or legacy central control functions for vehicles may be conveniently configured, by software installation/update, to detect a need for battery replenishment for the piece of equipment, select a vehicle from the plurality of vehicles, and provide an indication of an upcoming activation of the energy transfer mode to the selected vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic drawing illustrating a scenario according to some examples.
**FIG. 2** is a schematic drawing illustrating a vehicle according to some examples.
**FIG. 3** is a schematic drawing illustrating a vehicle sub-system according to some examples.
**FIG. 4** is a schematic drawing illustrating an energy exchange connection according to some examples, between a vehicle and a piece of equipment.
**FIG. 5A** is a combined flowchart and signaling diagram illustrating methods and signaling according to some examples.
**FIG. 5B** is a schematic drawing illustrating a vehicle fleet and a computer system implementing a remote vehicle selection function according to some examples.
**FIG. 6** is a schematic diagram illustrating a computer system for implementing examples disclosed herein according to some examples.
**FIG. 7** is a schematic drawing illustrating a computer program product in the form of a non-transitory computer-readable storage medium according to some examples.
**FIG. 8** is a schematic block diagram of a control unit according to some examples.

### DETAILED DESCRIPTION

The detailed description set forth below provides information and examples of the disclosed technology with sufficient detail to enable those skilled in the art to practice the disclosure.

According to some approaches suggested herein, there is provided convenient charging of battery powered equipment by a vehicle. According to some examples, the need to relocate the piece of equipment to enable charging may be reduced. According to some examples, the time may be reduced until a piece of equipment in need of charging is operable.

Even though exemplification is given with specific examples (e.g., the battery powered equipment being an excavator at a construction site and the vehicle being a dump truck), it should be noted that the principles suggested herein are equally applicable in other contexts and scenarios.

Generally, the battery powered equipment ("piece of equipment") may be any battery powered equipment. Some examples include - but are not limited to - land vehicles (e.g., heavy-duty vehicles, dump trucks), marine vehicles (e.g., boats), aerial/space vehicles (e.g., drones), construction equipments (e.g., excavators), mobile industrial appliances (e.g., robots), etc.

Also generally, the vehicle may be any suitable vehicle which comprises a primary power unit (PPU) and an energy storing system (ESS), and which is configurable in different operation modes including a default mode and an energy transfer mode, wherein the vehicle is adapted to transfer energy from the PPU and/or from the ESS to a piece of equipment external to the vehicle. Some examples include - but are not limited to - land vehicles (e.g., heavy-duty vehicles, dump trucks), marine vehicles (e.g., boats), aerial/space vehicles (e.g., drones), etc.

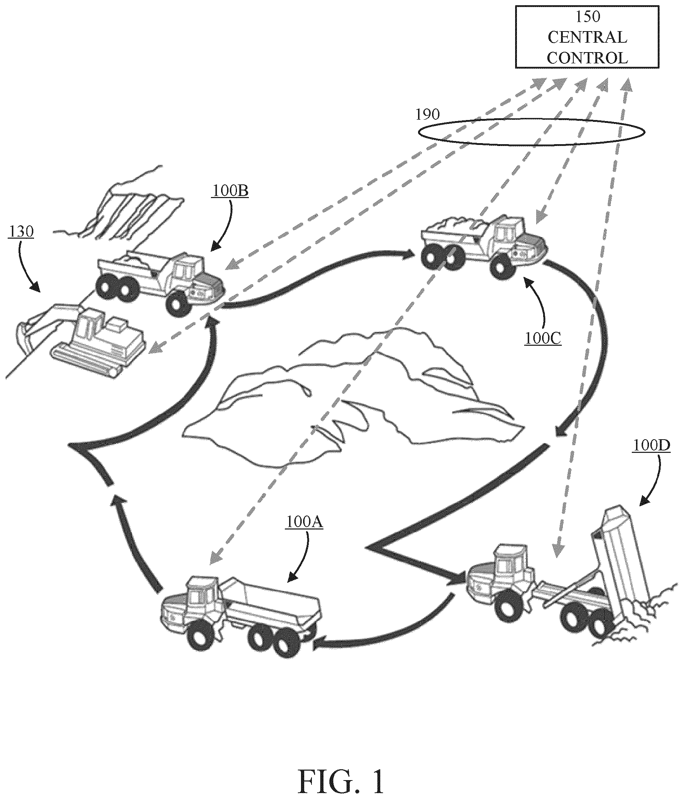

**FIG. 1** schematically illustrates an example scenario where the approaches suggested herein may be applicable. The scenario demonstrates an excavator **130** operating at a construction site. The excavator **130** is working in collaboration with one or more dump truck(s) **100A, 100B, 100C, 100D.** More particularly, the dump trucks in this scenario are loaded with material at the location of the excavator **(100B),** remove the loaded material from the location of the excavator **(100C),** discharge the loaded material at a discharging location **(100D),** and return unloaded to the location of the excavator **(100A).**

When the battery of the excavator **130** needs recharging, one possibility is to relocate the excavator to a connection point with power gird service or other charging possibilities. Such relocation in itself consumes a substantial amount of energy, which renders the charging procedure very inefficient as a whole. Furthermore, the task assigned to the excavator **130** must be interrupted (or another excavator must be used) until the excavator **130** returns, which may render other equipment (e.g., one or more dump truck(s) **100A, 100B, 100C, 100D)** in an idle state in the meantime.

Another possibility is to charge the excavator **130** without relocation. For example, one of the dump trucks **100A, 100B, 100C, 100D** may be assigned to transfer energy to the excavator **130.** This possibility will be further explored herein.

Also shown in **FIG. 1** **is a** central control function **150.** The central control function **150** may be implemented in any suitable way (e.g., as known in the art). For example, the central control function **150** may be implemented by a local server, a software application, a cloud based service, etc. In some examples, the central control function **150** may be associated with a specific construction site (or work site), and/or with a specific fleet of vehicles and equipment pieces **100A, 100B, 100C, 100D, 130.**

The central control function **150** is configured to coordinate assignment of at least one task among the vehicles and equipment pieces **100A, 100B, 100C, 100D, 130.** More specifically, the central control function **150** is configured to select a vehicle **100A, 100B, 100C, 100D** for energy transfer to the excavator **130.** To this end, the central control function **150** is configured to communicate with (transmit to and/or receive from) at least the vehicles **100A, 100B, 100C, 100D** which are available for energy transfer, and typically also with the excavator **130,** as illustrated by **190.** The communication 190 may be implemented in any suitable way (e.g., as known in the art).

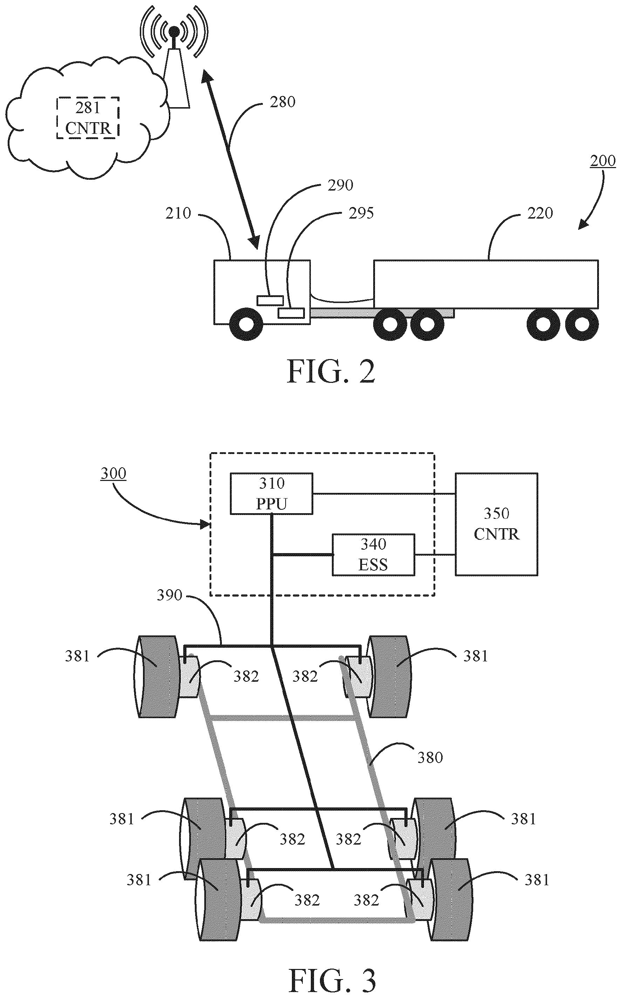

**FIG. 2** schematically illustrates an example vehicle **200** (compare with the vehicles **100A, 100B, 100C, 100D** of **FIG. 1****)** for cargo/material transport where the techniques disclosed herein can be advantageously applied. The vehicle **200** comprises a truck/tractor/towing unit **210** configured to tow one or more trailer unit(s) **220** in a known manner. The tractor unit **210** and/or the trailer unit(s) **220** may comprise a vehicle control unit (VCU) **290** configured to perform various vehicle control functions, such as vehicle motion management (VMM), power/energy management, etc. Any of one or more VCU(s) **290** may be configured to perform, or cause performance of, the techniques disclosed herein.

In some examples, the VCU(s) **290** may be in operative communication 280 with a remote vehicle control function **281** (CNTR; compare with **150** of **FIG. 1****).**

The VCU(s) **290** may be configured to control an energy exchange device (EED) **295** of the vehicle **200** to transfer electric energy from the vehicle **200** to a piece of equipment via an electric energy exchange connection (e.g., to replenish a battery of the piece of equipment). For example, a VCU **290** may comprise a controller configured to selectively enable and/or selectively disable transfer via the energy exchange device **295** (e.g., responsive to one or more of: formation of the exchange connection, input at a user interface, receipt of a request signal from the piece of equipment, receipt of a control signal **280** from a remote vehicle control function **281).**

Alternatively or additionally, a VCU **290** may be configured to transmit (or cause transmission of) information **280** pertaining to the vehicle **200** to a computer system implementing a remote vehicle control function **281** (e.g., information comprising one or more of: the location of the vehicle, the energy equipment of the vehicle, the current charge of the vehicle, the current activity of the vehicle, etc.).

**FIG. 3** schematically illustrates a vehicle sub-system **300** according to some examples. For example, the vehicle sub-system **300** may be comprised in a vehicle (compare with **100A, 100B, 100C, 100D of** **FIG. 1** and **200** of **FIG. 2****).** The vehicle-subsystem **300** is particularly suitable for a vehicle platform, which is also schematically illustrated in **FIG. 3****.**

According to the vehicle platform, wheels **381** are mounted in relation to a frame structure **380,** and one - or a plurality of - electric motors **382** are provided for driving the wheels **381** (e.g., by providing torque to one or more of the wheel(s)). For example, each electric motor **382** may be mounted in direct association with a respective wheel **381** (e.g., electric motor mounted on the respective wheel), thereby enabling individual wheel drive. However, other mounting approaches for the electric motors are possible (e.g., an electric motor being mounted in association with a corresponding wheel axle and configured to drive the wheels of that axle, an electric motor being mounted to enable it to drive two or more wheels of one side of the vehicle, etc.).

In the context of the vehicle platform, there is provided one or more power unit(s) configured to drive the electric motor(s) **382.** Various types of power units include (but are not limited to) an internal combustion engine (ICE) configured to drive an electric generator, a fuel cell arrangement (FC), and an energy storing system (ESS) **340** (e.g., a battery system). Any power unit(s) with the exception of an ESS will be collectively referred to herein as primary power unit(s) (PPU) **310.**

A primary power unit may drive the electric motor(s) **382** by directly supplying electric power/energy to the electric motor(s) and/or by supplying electric power/energy to the energy storing system **340,** which in turn supplies electric power/energy to the electric motor(s) **382.**

In some examples, the vehicle platform may provide a power unit interface configured to receive one or more primary power unit(s) **310,** whereby different types of primary power units can be utilized for the same vehicle platform. The power unit interface may be configured to receive and hold a single power unit at a time, or two or more power units in parallel.

In some examples, the vehicle platform may comprise a transfer network **390** configured to transfer electric energy; to supply the electric motor(s) **382** with electric energy from the power unit(s) **310, 340** (e.g., for propulsion) and/or to transfer excess energy generated by the electric motor(s) **382** (e.g., during braking) to the ESS **340.**

It should be noted that the vehicle platform is not intended as limiting, but merely provides an example context for the vehicle sub-system **300** comprising a PPU **310** and an ESS **340.**

Generally, the vehicle sub-system **300** is suitable for providing electric energy to an energy exchange device (EED) (compare with **295** of **FIG. 2****),** to be transferred - via an energy exchange connection - to a piece of equipment which is external to the vehicle that comprises the vehicle sub-system **300.** For example, electric energy from the power unit(s) **310, 340** may be provided to the EED.

Also shown in **FIG. 3** is a controller **350** (CNTR; compare with **290** of **FIG. 2****),** which is configured to control at least some of the operation of the power unit(s) **310, 340.** Particularly, the controller **350** may be configured to perform, or cause performance of, the techniques disclosed herein.

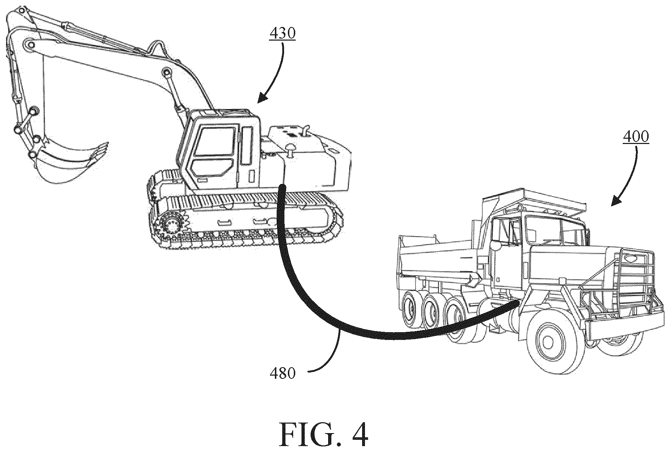

**FIG. 4** schematically illustrates an energy exchange connection **480** between a vehicle **400** (compare with **100A, 100B, 100C, 100D** of **FIG. 1** and **200** of **FIG. 2****)** and a piece of equipment **430** (compare with **130** of **FIG. 1****).** In this example, the piece of equipment **430** is an excavator and the vehicle **400** is a dump truck.

The energy exchange connection **480** comprises an electric energy exchange connection configured to transfer electric energy (e.g., using current and/or voltage transfer) from the vehicle **400** to the piece of equipment **430.** For example, the electric energy exchange connection may comprise an electric cable, or any other apparatus for transfer of electric energy (e.g., using transfer of electric energy by induction).

The energy exchange connection **480** is formed by use of an energy exchange device EED comprised in the vehicle **400** (compare with **295** of **FIG. 2****).** Additionally, forming of the energy exchange connection **480** may also comprise use (e.g., in a plug-socket manner) of an energy exchange device comprised in the piece of equipment **430** and/or an energy exchange device which is separate from the vehicle **400** and from the piece of equipment **430.**

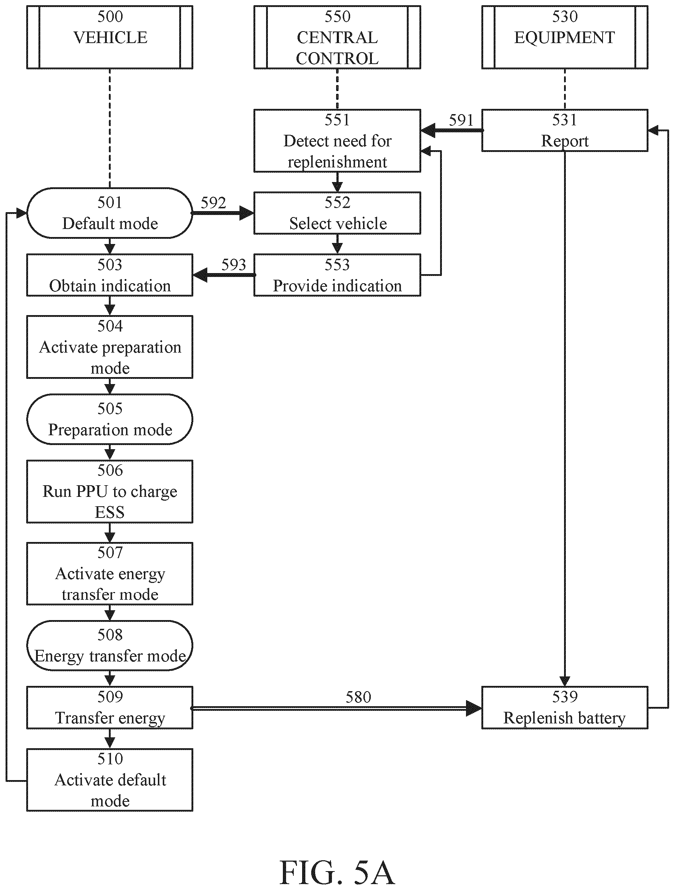

With reference to the example of **FIG. 5A****,** some approaches will now be exemplified for energy transfer from a vehicle (compare with **100A, 100B, 100C, 100D** of **FIG. 1****, 200** of **FIG. 2****,** and **400** of **FIG. 4****)** to a piece of equipment which is external to the vehicle (compare with **130** of **FIG. 1****,** and **430** of **FIG. 4****).**

Generally, the vehicle comprises a primary power unit (PPU; compare with **310** of **FIG. 3****)** and an energy storing system (ESS; compare with **340** of **FIG. 3****).** Also generally, the vehicle is configurable in different operation modes including a default mode and an energy transfer mode, wherein the vehicle is adapted to transfer energy to a piece of equipment external to the vehicle when configured in the energy transfer mode.

In some examples, the vehicle operates with some control from a central control function (compare with **150** of **FIG. 1****,** and **281** of **FIG. 2****).** It should be noted, however, that this context is merely an example, and that the vehicle may, in some examples, operate without control from any central control function (e.g., autonomously, or in coordination with one or more other vehicle or piece of equipment).

**FIG. 5A** illustrates a method for a vehicle **500** (compare with **100A, 100B, 100C, 100D** of **FIG. 1****, 200** of **FIG. 2****,** and **400** of **FIG. 4****).** **FIG. 5A** also illustrates a method of a central control function **550** (compare with **150** of **FIG. 1****,** and **281** of **FIG. 2****),** which may be used in association with the method of the vehicle **500** according to some examples. Furthermore, **FIG. 5A** illustrates a method for a piece of equipment **530** (compare with **130** of **FIG. 1****,** and **430** of **FIG. 4****),** which may be used in association with the method of the vehicle **500** according to some examples. Also shown in **FIG. 5A** is example signaling among the vehicle **500,** central control function **550,** and the piece of equipment **530.**

The methods of the vehicle **500** and the central control function **550** are (at least partially) computer-implemented methods. For example, the method of the vehicle **500** may be implemented/performed by a VCU (or any other suitable processing circuitry) of the vehicle. The method of the central control function **550** may be implemented/performed by any suitable centralized processing circuitry (e.g., as known in the art). For example, the method of the central control function **550** may be implemented/performed by processing circuitry of a computer system specifically associated with the vehicle **500** (e.g., associated with the site where the vehicle **500** operates, and/or associated with a fleet that comprises the vehicle **500).** Alternatively, the method of the central control function **550** may be implemented/performed by processing circuitry of a general purpose computer system (e.g., a server, or a collection of servers).

The vehicle **500** comprises a PPU and an ESS, and is configurable in different operation modes including a default mode and an energy transfer mode. When configured in the energy transfer mode, the vehicle is adapted to transfer energy from the PPU and/or from the ESS to a piece of equipment external to the vehicle. When configured in the default mode, the vehicle is adapted to perform any tasks that may be regarded as default tasks and/or as tasks not directly related to the energy transfer. Examples of default mode operation include - but are not limited to - material loading, material transport, material unloading, relocation for material loading, idling, etc.

The different operation modes also include a preparation mode, for improving charging by the vehicle of equipment external to the vehicle. For example, the preparation mode may reduce the time until a piece of equipment in need of charging is operable.

While operating in the default mode (as illustrated by **501),** the vehicle **500** may obtain an indication of an upcoming activation of the energy transfer mode (as illustrated by **503).** In response to the obtained indication, the preparation mode is activated (as illustrated by **504** and **505).**

For example, the indication of upcoming activation of the energy transfer mode may be obtained by receiving an energy transfer control signal **593** from a centralized control function **550,** as illustrated in **FIG. 5A****.**

Alternatively or additionally, the indication of upcoming activation of the energy transfer mode may be obtained by receiving an energy transfer request signal from a piece of equipment **530,** either directly or via a centralized control function **550.** In the former case, the reception of the energy transfer request signal may implicitly indicate that the vehicle **500** is in a vicinity of the piece of equipment **530** (e.g., if some short range communication is used).

Yet alternatively or additionally, the indication of upcoming activation of the energy transfer mode may be obtained by receiving an energy transfer preparation input via an operator interface associated with the vehicle **500.** The operator interface may be any suitable interface (e.g., a control interface integrated with the vehicle - such as a switch, or a remote control interface - such as a smartphone app). In some examples, an operator interface associated with the vehicle **500** may be applied for switching to/from any one or more of the different operation modes.

It should be noted that any suitable combination of the above (and/or other) examples may implement the obtainment of the indication of upcoming activation of the energy transfer mode. For example, a received energy transfer control signal or energy transfer request signal may trigger rendering of a corresponding indication via an operator interface, while there is no activation of the preparation mode until an energy transfer preparation input is received in response to the indication rendering.

While operating in the default mode (as illustrated by **501),** the vehicle **500** may be at any location in relation to the piece of equipment **530.** Thus, unless the vehicle **500** happens to be at the location of the piece of equipment **530** when the indication of an upcoming activation of the energy transfer mode is obtained, a relocation to the location of the piece of equipment **530** is typically triggered by the indication of an upcoming activation of the energy transfer mode. For example, the relocation may be triggered automatically, or by manual decision by an operator.

During the preparation mode, the PPU is caused to be active so as to provide power for charging the ESS (as illustrated by **506).**

For example, the PPU may be caused to operate at its maximum capacity, or within some specified range (e.g., above some threshold value, such as a certain percentage of maximum capacity). The specified range may be static or dynamic (e.g., lowering the threshold when PPU fuel is at a relatively low level, and/or lowering the threshold when ESS charge is at a relatively high level).

An aim may be to charge the ESS as much as possible (e.g., fully) before the energy transfer mode. Typically, this includes utilizing the time while the vehicle moves to the location of the piece of equipment for charging of the ESS. If the ESS becomes fully charged (or charged above some specified level) the process may be halted (at least temporarily), according to some examples.

Following the preparation mode, the energy transfer mode is activated (as illustrated by **507** and **508).** The activation of the energy transfer mode may be triggered in any suitable way. For example, arrival of the vehicle **500** at the location of the piece of equipment **530,** establishing of the energy transfer connection between the vehicle **500** and the piece of equipment **530,** reception of an energy transfer input via an operator interface associated with the vehicle **500,** reception of a control signal from the piece of equipment **530,** or any combination thereof, may trigger activation of the energy transfer mode.

During the energy transfer mode, energy is transferred from the PPU and/or the ESS of the vehicle **500** to the piece of equipment **530** (as illustrated by **509** and **580).**

For example, the PPU may be caused to operate at its maximum capacity, or within a specified range (e.g., above some threshold value, such as a certain percentage of maximum capacity), during the energy transfer mode. An aim may be to charge the piece of equipment as quickly as possible. The specified range may be static or dynamic (e.g., lowering the threshold when PPU fuel is at a relatively low level).

Alternatively or additionally, the ESS may be caused to be emptied at its maximum rate, or within a specified range (e.g., above some threshold value, such as a certain percentage of maximum rate), during the energy transfer mode. An aim may be to charge the piece of equipment as quickly as possible. The specified range may be static or dynamic (e.g., lowering the threshold when ESS charge is at a relatively low level).

The charging capacity (energy reception rate) may vary between different pieces of equipment. Alternatively or additionally, the charging capacity (energy reception rate) may vary dynamically for a specific piece of equipment (e.g., depending on the battery charge level). For example, the charging capacity typically decreases towards the end of a charging cycle.

In some examples, the energy transfer rate may be (at least partially) controlled by the piece of equipment **530.** For example, the piece of equipment **530** may indicate its energy transfer needs to the vehicle **500** (e.g., its current - dynamic - charging capacity, or reception rate, and/or its maximum charging capacity, or reception rate). Then, the vehicle **500** may adapt its operation accordingly (e.g., limit the energy transfer according to the indication from the piece of equipment 530).

If the power provided by the PPU exceeds the charging capacity (reception rate) of the piece of equipment during the energy transfer mode, the PPU operation may be reduced accordingly, and/or excess power from the PPU may be used to charge the ESS.

Following the energy transfer mode, the default mode is activated (as illustrated by **510** and **501),** and the vehicle **500** returns to default operation tasks (e.g., resuming a task that was interrupted by the indication of an upcoming activation of the energy transfer mode, or taking on a new task). The activation of the default mode may be triggered in any suitable way. For example, disabling of the energy transfer connection between the vehicle **500** and the piece of equipment **530,** reception of an energy transfer deactivation input via an operator interface associated with the vehicle **500,** reception of an energy transfer complete signal from the piece of equipment **530,** or any combination thereof, may trigger deactivation of the energy transfer mode and activation of the default mode.

In some examples, a centralized control function **550** may be applied for selection, among a plurality of vehicles, of the vehicle **500** that should transfer energy to a piece of equipment **530.** An aim may be to utilize the plurality of vehicles as efficiently as possible. For example, the central control may reduce the time until a piece of equipment in need of charging is operable.

The plurality of vehicles may be any suitable plurality (e.g., a fleet of vehicles, all vehicles at a specific site, all vehicles capable of energy transfer at a specific site, etc.).

The centralized control function **550** detects a need for battery replenishment for the piece of equipment (as illustrated by **551).**

For example, the need for battery replenishment may be detected by receiving an energy transfer request signal **591** from the piece of equipment **530,** as illustrated in **FIG. 5A****.**

Alternatively or additionally, the piece of equipment **530** may report its battery status repeatedly (e.g., at regular time intervals, at specific battery levels, etc.) to the centralized control function **550,** and the need for battery replenishment may be detected based thereon.

Yet alternatively or additionally, the need for battery replenishment may be detected by other considerations. For example, the centralized control function **550** may keep track of one or more of: an elapsed time since last charging of the piece of equipment **530,** an activity level of the piece of equipment **530** since last charging, environmental parameters (e.g., temperature), etc. and may detect the need for battery replenishment based thereon.

The centralized control function **550** selects a vehicle **500** from the plurality of vehicles (as illustrated by **552);** typically in response to the detection of the need for battery replenishment.

Then, the centralized control function **550** provides an indication of an upcoming activation of the energy transfer mode to the selected vehicle **500** in the form of an energy transfer control signal **593** (as illustrated by **553).**

In some examples, more than one vehicle may be selected and provided with an energy transfer control signal **593.** For example, when the final decision of taking on an energy transfer task lies with an operator of a vehicle after reception of the energy transfer control signal **593,** it may be beneficial to send the energy transfer control signal **593** to two or more vehicles for redundancy in case one or more vehicle operator(s) discard the energy transfer task.

The vehicle selection **552** may be based on any suitable approach. For example, it may be preferable to select a vehicle which comprises a PPU and/or an ESS. Alternatively or additionally, it may be preferable to select a vehicle which is configurable in a default mode, a preparation mode, and an energy transfer mode; as explained herein.

Yet alternatively or additionally, it may be preferable to select a vehicle which is relatively close to the location of the piece of equipment **530,** and/or which can move to the location of the piece of equipment **530** within a relatively short time. To this end, a vehicle may be selected which fulfils a distance condition. For example, the vehicle which is closest to the location of the piece of equipment **530,** and/or is within a certain distance from the location of the piece of equipment **530,** may be selected.

Yet alternatively or additionally, it may be preferable to select a vehicle which is not currently engaged in other tasks, and/or which is currently engaged in a task with relatively low priority. To this end, a vehicle may be selected which fulfils an activity condition. For example, the vehicle which is currently idle may be selected.

Yet alternatively or additionally, it may be preferable to select a vehicle which has advantageous charging characteristics for energy transfer. To this end, a vehicle may be selected which fulfils a charge condition. For example, a vehicle with a relatively high current charge level of the ESS (e.g., a highest current charge level, or a current charge level above a threshold value), and/or with a relatively high maximum charge level of the ESS (e.g., a highest maximum charge level, or a maximum charge level above a threshold value), and/or with a relatively high maximum charging rate of the ESS (e.g., a highest maximum charging rate, or a maximum charging rate above a threshold value), and/or with a relatively high maximum emptying rate of the ESS (e.g., a highest maximum emptying rate, or a maximum emptying rate above a threshold value), and/or with a relatively high maximum capacity of the PPU (e.g., a highest maximum capacity, or a maximum capacity above a threshold value), and/or with a relatively high current fuel level for the PPU (e.g., a highest current fuel level, or a current fuel level above a threshold value), may be selected.

When the vehicle selection **552** is based on vehicle-specific parameters (e.g., as exemplified above), the centralized control function **550** may receive information **592** regarding these parameters, as suitable. Such information may be provided directly from the vehicles to the centralized control function **550,** and/or may be provided to the centralized control function **550** from another source (e.g., a vehicle information service). In any case, such information **592** may be provided in direct connection to the selection **552** (as illustrated in **FIG. 5A****),** and/or in an initiation procedure for the vehicle **500,** and/or repeatedly (e.g., at regular time intervals, responsive to information change, etc.). For example, static information (e.g., maximum capacity, maximum charge, maximum rate, etc.) may be provided once to the centralized control function **550,** while dynamic information (e.g., current location, current activity, current charge, current fuel level, etc.) may be provided in direct connection to the selection **552** and/or repeatedly.

Turning to the piece of equipment **530,** it may be configured to report (as illustrated by **531)** various information to a centralized control function **550** (as illustrated in **FIG. 5A****)** and/or directly to the vehicle(s) **500.** For example, the reported information may comprise an energy transfer request signal **591,** and/or current location of the piece of equipment **530,** and/or current activity level of the piece of equipment **530,** environmental parameters (e.g., temperature) experienced by the piece of equipment **530,** etc.

At a centralized control function **550,** such reported information may be used to detect a need for battery replenishment of the piece of equipment **530,** and/or to select a suitable vehicle **500** for energy transfer.

At a vehicle **500,** such reported information may be used to detect a need for battery replenishment of the piece of equipment **530,** and/or to determine whether or not to take on the task of providing energy transfer to the piece of equipment **530.**

Once a suitable vehicle **500** is at the location of the piece of equipment **530,** and an energy transfer connection is established between the vehicle **500** and the piece of equipment **530,** energy may be received from the vehicle **500** (as illustrated by **539** and **580)** and may be used for battery replenishment.

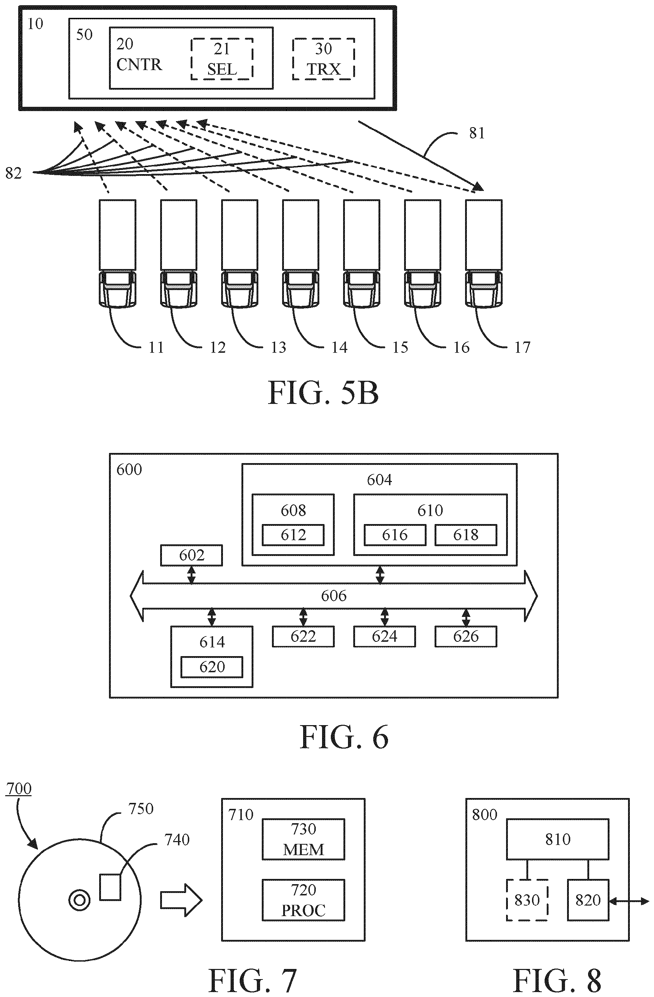

**FIG. 5B** schematically illustrates a vehicle fleet and a computer system **50** implementing a remote vehicle selection function according to some examples (compare with **150** of **FIG. 1****, 281** of **FIG. 2****,** and **550** of **FIG. 5A****),** to cause energy transfer to a piece of equipment (compare with **130** of **FIG. 1****, 430** of **FIG. 4****,** and **530** of **FIG. 5A****).** The computer system **50** may be implemented in any suitable way. For example, the computer system **50** may be implemented by a server **10,** a system of servers, a cloud service, etc.

The example scenario of **FIG. 5B** relates to a vehicle fleet that comprises a plurality of vehicles **11, 12, 13, 14, 15, 16, 17** (compare with **100A, 100B, 100C, 100D** of **FIG. 1****),** each configurable for energy transfer to a piece of equipment. For example, all vehicles of the vehicle fleet may be associated with a same vehicle manufacturer and/or a same vehicle owner. Alternatively or additionally, all vehicles of the vehicle fleet may be associated with a same geographical area (e.g., a construction site, an industry complex, etc.).

The computer system **50** comprises a controller (CNTR; e.g., controlling/processing circuitry) **20.**

The controller **20** is configured to select (or cause selection of) a vehicle (here **17;** compare with **400** of **FIG. 4****,** and **500** of **FIG. 5A****)** from the plurality of available vehicles **11, 12, 13, 14, 15, 16, 17.** To this end the controller **20** may comprise, or be otherwise associated with (e.g., connected, or connectable, to) a selector (SEL; e.g., selecting circuitry or a selection module) **21,** configured to perform the selection (e.g., as exemplified herein).

The controller **20** is also configured to transmit a control signal **81** (compare with **593** of **FIG. 5A****)** to the selected vehicle to trigger energy transfer from the selected vehicle to the piece of equipment (and to activate the preparation mode as applicable). To this end the controller **20** may comprise, or be otherwise associated with (e.g., connected, or connectable, to) a transmitter - illustrated here in the form of a transceiver (TRX) **30** - configured to perform the transmission.

Each of the vehicles typically also has a transceiver for communication with the controller **20.**

In some examples, the controller **20** may also be configured to receive (e.g., via the transceiver **30)** respective information **82** pertaining to each of the plurality of vehicles (compare with **592** of **FIG. 5A****),** and to base the selection of a vehicle on the received information.

For example, the information **82** (or part thereof) may be received from the vehicle(s) as illustrated in **FIG. 5B****.** Alternatively or additionally, the information **82** (or part thereof) may be received from a vehicle information service (e.g., provided by a vehicle manufacturer). Yet alternatively or additionally, the information **82** (or part thereof) may be received from a vehicle information input device (e.g., a user interface).

Generally, the information **82** may be static or dynamic. Examples of static information include (but is not limited to) the type(s) of power unit (e.g., ICE, FC, ESS, etc.) of the vehicle, etc. Examples of dynamic information include (but is not limited to) the location of the vehicle, the charge level of the vehicle, etc. Static information typically needs to be supplied only once (e.g., when the vehicle is introduced into the fleet), or relatively seldom. Dynamic information typically needs to be updated repeatedly (e.g., with some periodicity, responsive to information change, etc.). Static and/or dynamic information may be updated responsive to an update request issued by the remote vehicle selection function.

According to some examples, there is provided approaches for replenishing the battery charge of a piece of equipment (e.g., an excavator) at a work site in which a plurality of vehicles (e.g., dump trucks) serve the piece of equipment. An advantage of at least some of the suggested approaches is that the piece of equipment does not need to be relocated to a charging station. An advantage of at least some of the suggested approaches is that the piece of equipment can be charged relatively quickly.

Typically, a suitable vehicle for providing the charging to the piece of equipment is configurable in at two three different modes, including a default mode (wherein the vehicle provides normal service, e.g., material transport) and an energy transfer mode (wherein the vehicle transfers energy to the piece of equipment, e.g., via a cable).

Preferably, the different modes further include a transfer preparation mode preceding the energy transfer mode (wherein the vehicle runs the PPU - e.g., at maximum capacity - to charge the ESS as much as possible before the energy transfer commences).

In the energy transfer mode, the PPU may be run at maximum capacity and/or the ESS may be emptied at maximum rate.

In the energy transfer mode, the ESS may be charged by using excess energy from the PPU (e.g., when the PPU output exceeds a maximum reception rate for the piece of equipment).

A central coordinator may be used for the plurality of vehicles to select a suitable vehicle for energy transfer (e.g., a vehicle with high ESS charge, high ESS capacity, high PPU capacity, etc.) and send a control signal to the selected vehicle.

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device
interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit (VCU), a centralized control server, or other suitable control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 7** illustrates a computer program product **700** exemplified as a non-transitory computer-readable medium in the form of a compact disc (CD) ROM **750.** The computer-readable medium has stored thereon program code **740** comprising instructions. The program code is loadable into processing circuitry (PROC; e.g., a data processing unit) **720,** which may, for example, be comprised in a control unit **710** (e.g., a VCU, or a centralized control server). When loaded into the processing circuitry, the program code may be stored in a memory (MEM) **730** associated with, or comprised in, the processing circuitry. According to some examples, the program code may, when loaded into, and run by, the processing circuitry, cause execution of method steps according to, for example, any of the methods described herein.

**FIG. 8** schematically illustrates, in terms of a number of functional units, the components of a control unit **800** according to some examples. Processing circuitry **810** is provided using any combination of one or more of a suitable central processing unit CPU, multiprocessor, microcontroller, digital signal processor DSP, etc., capable of executing software instructions stored in a computer program product, e.g. in the form of a storage medium **830.** The processing circuitry **810** may further be provided as at least one application specific integrated circuit ASIC, or field programmable gate array FPGA.

Particularly, the processing circuitry **810** is configured to cause the control unit **800** to perform a set of operations, or steps, such as any of the methods discussed in connection to **FIG. 5A****.**

For example, the storage medium **830** may store the set of operations, and the processing circuitry **810** may be configured to retrieve the set of operations from the storage medium **830** to cause the control unit **800** to perform the set of operations. The set of operations may be provided as a set of executable instructions. Thus, the processing circuitry **810** is thereby arranged to execute methods as herein disclosed. In particular, there is disclosed a control unit **800** comprising processing circuitry **810,** an interface **820** coupled to the processing circuitry **810,** and a memory **830** coupled to the processing circuitry **810,** wherein the memory comprises machine readable computer program instructions that, when executed by the processing circuitry, causes the control unit to perform the methods discussed herein.

The storage medium **830** may also comprise persistent storage, which, for example, can be any single one or combination of magnetic memory, optical memory, solid state memory or even remotely mounted memory.

The control unit **800** may further comprise an interface **820** for communications with at least one external device. As such, the interface **820** may comprise one or more transmitters and receivers, comprising analogue and digital components and a suitable number of ports for wireline or wireless communication.

The processing circuitry **810** controls the general operation of the control unit **800,** e.g., by sending data and control signals to the interface **820** and the storage medium **830,** by receiving data and reports from the interface **820,** and by retrieving data and instructions from the storage medium **830.** Other components, as well as the related functionality, of the control node are omitted in order not to obscure the concepts presented herein.

### A non-exhaustive list of examples:

**Example 1:** A computer system for a vehicle which comprises a primary power unit, PPU, and an energy storing system, ESS, wherein the vehicle is configurable in different operation modes including a default mode, a preparation mode, and an energy transfer mode, and wherein the vehicle is adapted to transfer energy from the PPU and/or from the ESS to a piece of equipment external to the vehicle when configured in the energy transfer mode, the computer system comprising processing circuitry configured to: obtain an indication of an upcoming activation of the energy transfer mode, activate the preparation mode in response to the obtained indication, cause the PPU to provide power for charging the ESS during the preparation mode, and perform the indicated activation of the energy transfer mode following the preparation mode.
**Example 2:** The computer system of **Example 1,** wherein the processing circuitry is configured to cause the PPU to provide power for charging the ESS during the preparation mode by causing the PPU to operate at its maximum capacity, or within a specified range.
**Example 3:** The computer system of any of **Examples 1-2,** wherein the processing circuitry is further configured to - during the energy transfer mode - cause one or more of: the PPU to operate at its maximum capacity, or within a specified range, and the ESS to be emptied at its maximum rate, or within a specified range.
**Example 4:** The computer system of any of **Examples 1-3,** wherein the processing circuitry is further configured to - responsive to the power provided by the PPU exceeding a maximum reception rate of the piece of equipment during the energy transfer mode - cause the PPU to provide an excess of the power for charging the ESS.
**Example 5:** The computer system of any of **Examples 1-4** 4-7, wherein the processing circuitry is configured to obtain the indication of an upcoming activation of the energy transfer mode by receiving an energy transfer control signal from a centralized control function.
**Example 6:** The computer system of any of **Examples 1-5,** wherein the processing circuitry is configured to obtain the indication of an upcoming activation of the energy transfer mode by receiving an energy transfer request signal from the piece of equipment.
**Example 7:** The computer system of any of **Examples 1-6,** wherein the processing circuitry is configured to obtain the indication of an upcoming activation of the energy transfer mode by receiving an energy transfer preparation input via an operator interface associated with the vehicle.
**Example 8:** A vehicle comprising the computer system of any of **Examples 1-7,** a primary power unit, PPU, and an energy storing system, ESS, wherein the vehicle is configurable in different operation modes including a default mode, a preparation mode, and an energy transfer mode, wherein the vehicle is adapted to transfer energy to a piece of equipment external to the vehicle when configured in the energy transfer mode.
**Example 9:** A computer system for centralized control of a plurality of vehicles adapted to transfer energy to a piece of equipment when configured in an energy transfer mode, the computer system comprising processing circuitry configured to: detect a need for battery replenishment for the piece of equipment, select a vehicle from the plurality of vehicles, and provide an indication of an upcoming activation of the energy transfer mode to the selected vehicle.
**Example 10:** The computer system of **Example 9,** wherein the processing circuitry is configured to select a vehicle from the plurality of vehicles by selecting a vehicle which comprises a primary power unit, PPU, and an energy storing system, ESS, wherein the vehicle is configurable in different operation modes including a default mode, a preparation mode in which the PPU provides power for charging the ESS, and an energy transfer mode in which energy is transferred from the PPU and/or from the ESS.
**Example 11:** The computer system of any of **Examples 9-10,** wherein the processing circuitry is configured to select a vehicle from the plurality of vehicles by selecting a vehicle which fulfills one or more of: a charge condition, a distance condition, and an activity condition.
**Example 12:** A computer-implemented method for a vehicle which comprises a primary power unit, PPU, and an energy storing system, ESS, wherein the vehicle is configurable in different operation modes including a default mode, a preparation mode, and an energy transfer mode, and wherein the vehicle is adapted to transfer energy from the PPU and/or from the ESS to a piece of equipment external to the vehicle when configured in the energy transfer mode, the method comprising: obtaining (by processing circuitry of a computer system) an indication of an upcoming activation of the energy transfer mode, activating (by the processing circuitry) the preparation mode in response to the obtained indication, causing (by the processing circuitry) the PPU to provide power for charging the ESS during the preparation mode, and performing (by the processing circuitry) the indicated activation of the energy transfer mode following the preparation mode.
**Example 13:** The method of **Example 12,** wherein causing the PPU to provide power for charging the ESS during the preparation mode comprises causing (by the processing circuitry) the PPU to operate at its maximum capacity, or within a specified range.
**Example 14:** The method of any of **Examples 12-13,** further comprising - during the energy transfer mode - causing (by the processing circuitry) one or more of: the PPU to operate at its maximum capacity, or within a specified range, and the ESS to be emptied at its maximum rate, or within a specified range.
**Example 15:** The method of any of **Examples 12-14,** further comprising - responsive to the power provided by the PPU exceeding a maximum reception rate of the piece of equipment during the energy transfer mode - causing (by the processing circuitry) the PPU to provide an excess of the power for charging the ESS.
**Example 16:** The method of any of **Examples 12-15,** wherein obtaining the indication of an upcoming activation of the energy transfer mode comprises receiving an energy transfer control signal from a centralized control function.
**Example 17:** The method of any of **Examples 12-16,** wherein obtaining the indication of an upcoming activation of the energy transfer mode comprises receiving an energy transfer request signal from the piece of equipment.
**Example 18:** The method of any of **Examples 12-17,** wherein obtaining the indication of an upcoming activation of the energy transfer mode comprises receiving an energy transfer preparation input via an operator interface associated with the vehicle.
**Example 19:** A computer-implemented method for centralized control of a plurality of vehicles adapted to transfer energy to a piece of equipment when configured in an energy transfer mode, the method comprising: detecting (by processing circuitry of a computer system) a need for battery replenishment for the piece of equipment, selecting (by the processing circuitry) a vehicle from the plurality of vehicles, and providing (by the processing circuitry) an indication of an upcoming activation of the energy transfer mode to the selected vehicle.
**Example 20:** The method of **Example 19,** wherein selecting a vehicle from the plurality of vehicles comprises selecting (by the processing circuitry) a vehicle which comprises a primary power unit, PPU, and an energy storing system, ESS, wherein the vehicle is configurable in different operation modes including a default mode, a preparation mode in which the PPU provides power for charging the ESS, and an energy transfer mode in which energy is transferred from the PPU and/or from the ESS.
**Example 21:** The method of any of **Examples 19-20,** wherein selecting a vehicle from the plurality of vehicles comprises selecting (by the processing circuitry) a vehicle which fulfills one or more of: a charge condition, a distance condition, and an activity condition.
**Example 22:** A computer program product comprising program code for performing, when executed by the processing circuitry, the method of any of **Examples 12-21.**
**Example 23:** A non-transitory computer-readable storage medium comprising instructions, which when executed by the processing circuitry, cause the processing circuitry to perform the method of any of **Examples 12-21.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (290, 350, 550, 600) for a vehicle (200, 400, 500) which comprises a primary power unit (310), PPU, and an energy storing system (340), ESS, wherein the vehicle is configurable in different operation modes including a default mode (501), a preparation mode (505), and an energy transfer mode (508), and wherein the vehicle is adapted to transfer energy from the PPU and/or from the ESS to a piece of equipment (130, 430, 530) external to the vehicle when configured in the energy transfer mode, the computer system comprising processing circuitry configured to:
obtain an indication of an upcoming activation of the energy transfer mode;
activate the preparation mode in response to the obtained indication;
cause the PPU to provide power for charging the ESS during the preparation mode; and
perform the indicated activation of the energy transfer mode following the preparation mode.

2. A vehicle (200, 400, 500) comprising the computer system of claim 1, a primary power unit (310), PPU, and an energy storing system (340), ESS, wherein the vehicle is configurable in different operation modes including a default mode (501), a preparation mode (505), and an energy transfer mode (508), wherein the vehicle is adapted to transfer energy to a piece of equipment (130, 430, 530) external to the vehicle when configured in the energy transfer mode.

3. A computer system (150, 281, 600) for centralized control of a plurality of vehicles (100A, 100B, 100C, 100D, 200, 400, 500) adapted to transfer energy to a piece of equipment (130, 430, 530) when configured in an energy transfer mode, the computer system comprising processing circuitry configured to:
detect a need for battery replenishment for the piece of equipment;
select a vehicle from the plurality of vehicles; and
provide an indication of an upcoming activation of the energy transfer mode to the selected vehicle.

4. A computer-implemented method for a vehicle (200, 400, 500) which comprises a primary power unit (310), PPU, and an energy storing system (340), ESS, wherein the vehicle is configurable in different operation modes including a default mode (501), a preparation mode (505), and an energy transfer mode (508), and wherein the vehicle is adapted to transfer energy (580) from the PPU and/or from the ESS to a piece of equipment (130, 430, 530) external to the vehicle when configured in the energy transfer mode, the method comprising:
obtaining (503), by processing circuitry of a computer system, an indication of an upcoming activation of the energy transfer mode;
activating (504), by the processing circuitry, the preparation mode in response to the obtained indication;
causing (506), by the processing circuitry, the PPU to provide power for charging the ESS during the preparation mode; and
performing (507), by the processing circuitry, the indicated activation of the energy transfer mode following the preparation mode.

5. The method of claim 4, wherein causing the PPU to provide power for charging the ESS during the preparation mode comprises causing, by the processing circuitry, the PPU to operate at its maximum capacity, or within a specified range.

6. The method of any of claims 4-5, further comprising - during the energy transfer mode - causing, by the processing circuitry, one or more of:
the PPU to operate at its maximum capacity, or within a specified range; and
the ESS to be emptied at its maximum rate, or within a specified range.

7. The method of any of claims 4-6, further comprising - responsive to the power provided by the PPU exceeding a maximum reception rate of the piece of equipment during the energy transfer mode - causing, by the processing circuitry, the PPU to provide an excess of the power for charging the ESS.

8. The method of any of claims 4-7, wherein obtaining the indication of an upcoming activation of the energy transfer mode comprises receiving an energy transfer control signal (593) from a centralized control function (150, 281, 550).

9. The method of any of claims 4-8, wherein obtaining the indication of an upcoming activation of the energy transfer mode comprises receiving an energy transfer request signal from the piece of equipment.

10. The method of any of claims 4-9, wherein obtaining the indication of an upcoming activation of the energy transfer mode comprises receiving an energy transfer preparation input via an operator interface associated with the vehicle.

11. A computer-implemented method for centralized control of a plurality of vehicles (100A, 100B, 100C, 100D, 200, 400, 500) adapted to transfer energy to a piece of equipment (130, 430, 530) when configured in an energy transfer mode, the method comprising:
detecting (551), by processing circuitry of a computer system, a need for battery replenishment for the piece of equipment;
selecting (552), by the processing circuitry, a vehicle from the plurality of vehicles; and
providing (553), by the processing circuitry, an indication of an upcoming activation of the energy transfer mode to the selected vehicle.

12. The method of claim 11, wherein selecting a vehicle from the plurality of vehicles comprises selecting, by the processing circuitry, a vehicle which comprises a primary power unit (310), PPU, and an energy storing system (340), ESS, wherein the vehicle is configurable in different operation modes including a default mode (501), a preparation mode (505) in which the PPU provides power for charging the ESS, and an energy transfer mode (508) in which energy is transferred from the PPU and/or from the ESS.

13. The method of any of claims 11-12, wherein selecting a vehicle from the plurality of vehicles comprises selecting, by the processing circuitry, a vehicle which fulfills one or more of: a charge condition, a distance condition, and an activity condition.

14. A computer program product (700) comprising program code for performing, when executed by the processing circuitry, the method of any of claims 4-13.

15. A non-transitory computer-readable storage medium (750) comprising instructions, which when executed by the processing circuitry, cause the processing circuitry to perform the method of any of claims 4-13.

## Amended claims

### Amended claims in accordance with Rule 137(2) EPC.

1. A computer system (290, 350, 550, 600) for a vehicle (200, 400, 500) which comprises a primary power unit (310), PPU, and an energy storing system (340), ESS, wherein the vehicle is configurable in different operation modes including a default mode (501) wherein the vehicle performs tasks not directly related to energy transfer to a piece of equipment (130, 430, 530) external to the vehicle, a preparation mode (505) in which the PPU provides power for charging the ESS, and an energy transfer mode (508) in which energy is transferred from the PPU and/or from the ESS to the piece of equipment external to the vehicle, and wherein the vehicle is adapted to control an energy exchange device of the vehicle to transfer energy from the PPU and/or from the ESS to the piece of equipment external to the vehicle via an electric energy exchange connection when configured in the energy transfer mode, the computer system comprising processing circuitry configured to:
obtain an indication of an upcoming activation of the energy transfer mode;
activate the preparation mode in response to the obtained indication;
cause the PPU to provide power for charging the ESS during the preparation mode; and
perform the indicated activation of the energy transfer mode following the preparation mode.

2. A vehicle (200, 400, 500) comprising the computer system of claim 1, a primary power unit (310), PPU, and an energy storing system (340), ESS, wherein the vehicle is configurable in different operation modes including a default mode (501) wherein the vehicle performs tasks not directly related to energy transfer to a piece of equipment (130, 430, 530) external to the vehicle, a preparation mode (505) in which the PPU provides power for charging the ESS, and an energy transfer mode (508) in which energy is transferred from the PPU and/or from the ESS to the piece of equipment external to the vehicle, wherein the vehicle is adapted to control an energy exchange device of the vehicle to transfer energy to the piece of equipment external to the vehicle via an electric energy exchange connection when configured in the energy transfer mode.

3. A computer system (150, 281, 600) for centralized control of a plurality of vehicles (100A, 100B, 100C, 100D, 200, 400, 500) adapted to transfer energy to a piece of equipment (130, 430, 530) when configured in an energy transfer mode, the computer system comprising processing circuitry configured to:
detect a need for battery replenishment for the piece of equipment;
select a vehicle from the plurality of vehicles; and
provide an indication of an upcoming activation of the energy transfer mode to the selected vehicle.

4. A computer-implemented method for a vehicle (200, 400, 500) which comprises a primary power unit (310), PPU, and an energy storing system (340), ESS, wherein the vehicle is configurable in different operation modes including a default mode (501) wherein the vehicle performs tasks not directly related to energy transfer to a piece of equipment (130, 430, 530) external to the vehicle, a preparation mode (505) in which the PPU provides power for charging the ESS, and an energy transfer mode (508) in which energy is transferred from the PPU and/or from the ESS to the piece of equipment external to the vehicle, and wherein the vehicle is adapted to control an energy exchange device of the vehicle to transfer energy (580) from the PPU and/or from the ESS to the piece of equipment external to the vehicle via an electric energy exchange connection when configured in the energy transfer mode, the method comprising:
obtaining (503), by processing circuitry of a computer system, an indication of an upcoming activation of the energy transfer mode;
activating (504), by the processing circuitry, the preparation mode in response to the obtained indication;
causing (506), by the processing circuitry, the PPU to provide power for charging the ESS during the preparation mode; and
performing (507), by the processing circuitry, the indicated activation of the energy transfer mode following the preparation mode.

5. The method of claim 4, wherein causing the PPU to provide power for charging the ESS during the preparation mode comprises causing, by the processing circuitry, the PPU to operate at its maximum capacity, or within a specified range.

6. The method of any of claims 4-5, further comprising - during the energy transfer mode - causing, by the processing circuitry, one or more of:
the PPU to operate at its maximum capacity, or within a specified range; and
the ESS to be emptied at its maximum rate, or within a specified range.

7. The method of any of claims 4-6, further comprising - responsive to the power provided by the PPU exceeding a maximum reception rate of the piece of equipment during the energy transfer mode - causing, by the processing circuitry, the PPU to provide an excess of the power for charging the ESS.

8. The method of any of claims 4-7, wherein obtaining the indication of an upcoming activation of the energy transfer mode comprises receiving an energy transfer control signal (593) from a centralized control function (150, 281, 550).

9. The method of any of claims 4-8, wherein obtaining the indication of an upcoming activation of the energy transfer mode comprises receiving an energy transfer request signal from the piece of equipment.

10. The method of any of claims 4-9, wherein obtaining the indication of an upcoming activation of the energy transfer mode comprises receiving an energy transfer preparation input via an operator interface associated with the vehicle.

11. A computer-implemented method for centralized control of a plurality of vehicles (100A, 100B, 100C, 100D, 200, 400, 500) adapted to transfer energy to a piece of equipment (130, 430, 530) when configured in an energy transfer mode, the method comprising:
detecting (551), by processing circuitry of a computer system, a need for battery replenishment for the piece of equipment;
selecting (552), by the processing circuitry, a vehicle from the plurality of vehicles; and
providing (553), by the processing circuitry, an indication of an upcoming activation of the energy transfer mode to the selected vehicle.

12. The method of claim 11, wherein selecting a vehicle from the plurality of vehicles comprises selecting, by the processing circuitry, a vehicle which comprises a primary power unit (310), PPU, and an energy storing system (340), ESS, wherein the vehicle is configurable in different operation modes including a default mode (501) wherein the vehicle performs tasks not directly related to energy transfer to a piece of equipment (130, 430, 530) external to the vehicle, a preparation mode (505) in which the PPU provides power for charging the ESS, and an energy transfer mode (508) in which energy is transferred from the PPU and/or from the ESS to the piece of equipment external to the vehicle.

13. The method of any of claims 11-12, wherein selecting a vehicle from the plurality of vehicles comprises selecting, by the processing circuitry, a vehicle which fulfills one or more of: a charge condition, a distance condition, and an activity condition.

14. A computer program product (700) comprising program code for performing, when executed by the processing circuitry, the method of any of claims 4-13.

15. A non-transitory computer-readable storage medium (750) comprising instructions, which when executed by the processing circuitry, cause the processing circuitry to perform the method of any of claims 4-13.
